# EUROPEAN PATENT SPECIFICATION

(11) **EP 2 044 832 B1**
(45) Date of publication and mention of the grant of the patent: **23.02.2011**
(21) Application number: 08017454.3
(22) Date of filing: 03.10.2008
(51) Int. Cl.: A01G 1/06

(54) **Branch carrier**
Abzweigungsträger
Support de branche

(30) Priority: 03.10.2007 BE 200700473
(43) Date of publication of application: 08.04.2009
(73) Proprietor: B. Rombouts Beheer B.V., 5527 JT Hapert (NL)
(72) Inventor: Rombouts, Peter Karel Maria, 5527 JT Hapert (NL); Rombouts, Norbert Johan Leonard, 5527 JT Hapert (NL)
(74) Representative: Griebling, Onno

(56) References cited:
- EP-A- 0 853 873
- US-A1- 2005 246 948

## Description

The invention relates to a device for offering an elongated branch with stems and leaves to an inspection and/or treating device while displacing the branch in, and rotating the branch around the longitudinal direction thereof.

Such a device is known from EP 0853873 and EP1 377 153, both in the name of Applicant.

Devices of this kind are used in installations in which branches are divided up into scions in a fully automatic way. One end of a branch which is to be treated is suspended from a clamping device which can be moved up and down and rotated around a vertical axis, and is brought in front of an assessing device which comprises an electronic camera and suitable logical devices, and thereafter rotated once or several times over 360 degrees so that the assessing device can generate a digital image which is stored in a memory. Based thereon in a next treatment step the branch is cut into scions by means of a trimming or cutting device which can be set at several levels so that the branch is divided into scions which each comprise part of the stem of the branch and, protruding therefrom, a stem with a leaf at the end thereof.

As a result of the underlying principle - supporting the branch in a suspended manner at one end on a carrier which can be adjusted in a vertical direction and rotated around a vertical axis - this known device can only be used with relatively short branches. In the case of a long branch which is supported at one end thereof, the lower end thereof cannot describe a predictable path during the cutting off of scions thereof, which must, of course, start at the lower parts and thus a correct treatment of such branches with the known device is practically impossible.

The invention aims to obviate this drawback and to this end the device is provided with a mainly tubular guide of which the inner dimensions are adapted to he outer contours of a branch to be treated with the stems and leaves thereof, said guide being coupled with means for the controllable rotation thereof around its axis, having a input end and an output end, and cooperating with means to displace a branch, supplied into the input end, to past the output end.

By guiding the branch through the tubular guide it is ensured that during the upward and downward movement of the branch and during the rotation thereof the branch will always describe a reproducible path because the untreated part of the branch is immovably enclosed in the tubular guide. Thus long branches, too, can be treated in a reliable way.

In a first embodiment the means for displacing the branch comprise driving rollers below the output end of the guide, to be driven rotatingly, reaching with their outer surfaces to near the axis of the guide and having axes of rotation which cross the axes of the guide.

The installation is preferably embodied in the way as described in claim 3.

In a second embodiment which is particularly suitable to treat very fragile branches, the means for displacing the branch are made up by a hose from supple material, guided around the input and output end and which is, at each tube end edge, folded back in the direction of the other, and by means to exert a pulling force on the material which is folded around the one edge in the direction of the other edge.

By displacing the hose from the input end to the output end a branch, supplied at the input end, will be driven on by the supple material of the hose and no harm will be done to the branch and/or the stems end leaves thereof.

Preferred embodiments are described in the claims 5-7.

The invention is elucidated on the hand of the drawing.
Figure 1 shows a schematic longitudinal cross-section of a first embodiment of the invention;
figure 2 shows a perspective upper view of this embodiment;
figure 3 shows a perspective lower view of this embodiment, thus looking at the driving rollers;
figure 4 is a schematic longitudinal cross-section of a second embodiment, particularly useful for treating very fragile branches.

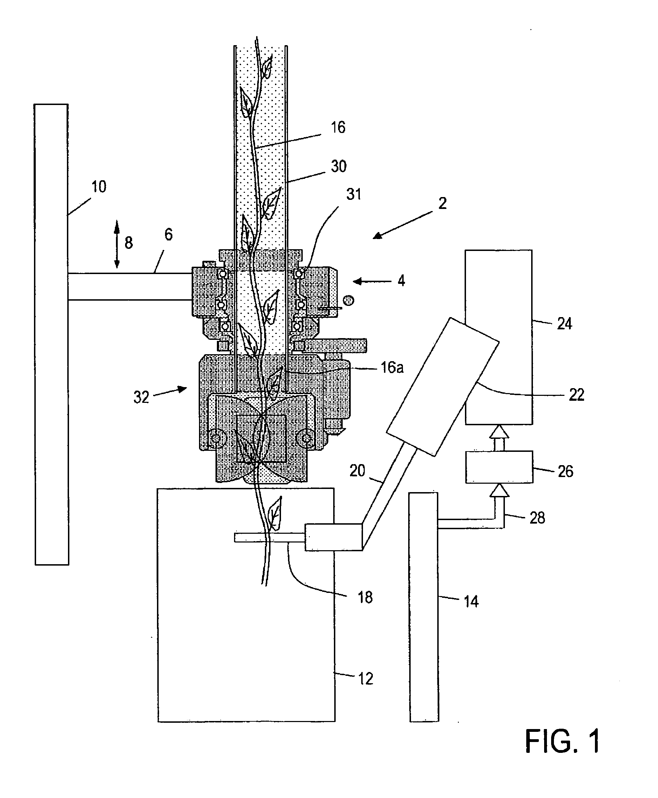

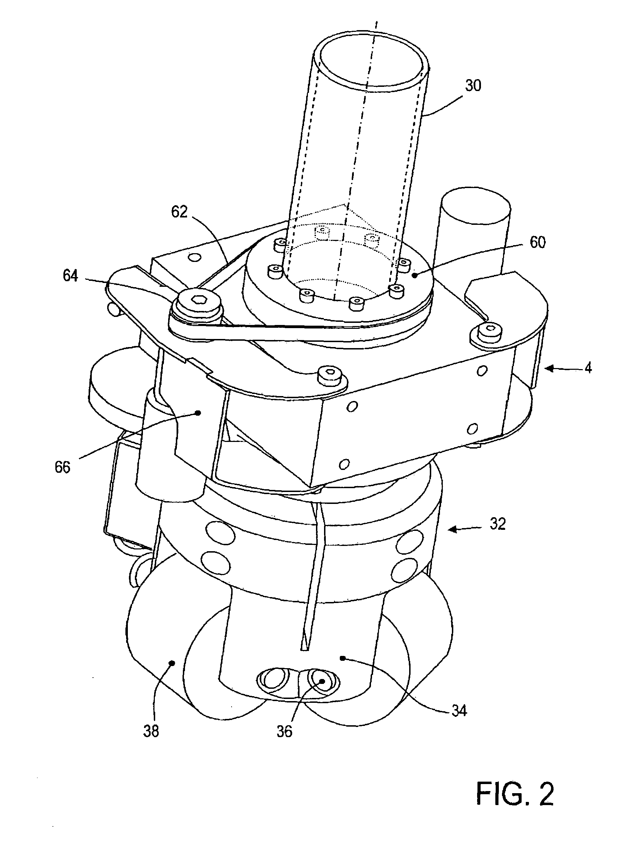

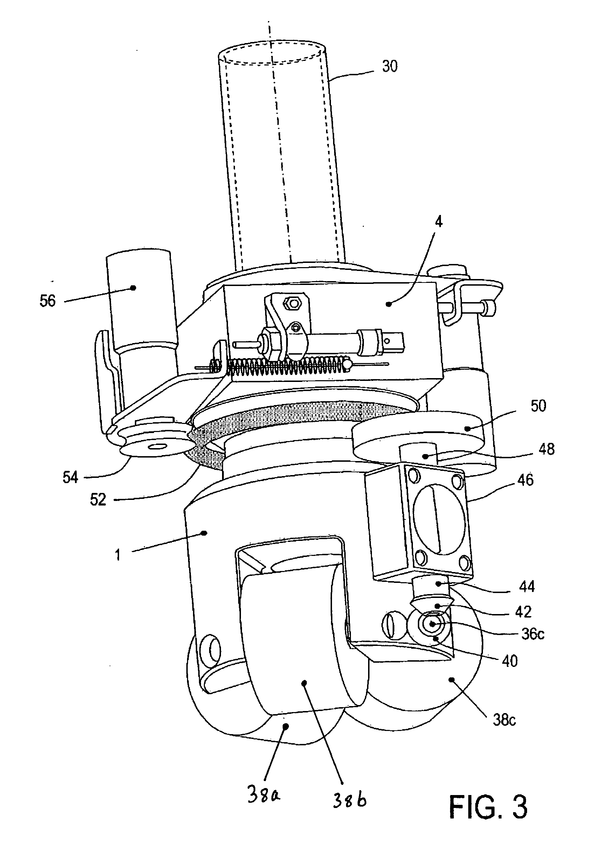

In the figures 1-3 a first embodiment of a device for offering elongated branches to an assessing and/or treating device is in its entirety indicated with reference numeral 2. Figure 1 shows such a device 2 of which the central carrying housing 4 can be moved up and down in vertical direction in the direction of the arrows 8 by means of a supporting arm 6 and is supported in a way, which is not shown in details, by a frame 10. This frame is part of a complete installation for dividing up branches into scions, of which installation here only schematically are shown an opto-electronic so-called "vision device" and a controlled cutter to cut through the branch to be treated at predetermined places. The operating principle of such an installation is described extensively in the already mentioned publications and is not described here again.

The shown installation comprises a lighting plane 12 and one or more cameras directed thereto; one thereof is shown schematically and indicated with reference numeral 14. A branch, such as the branch 16 which is to be treated is moved in longitudinal direction thereof in a continuous or stepwise movement in front of the lighting plane 12 and during this movement rotated over 360° around its longitudinal axis and during this movement, an image of the contours of the branch is made by means of one or more cameras, such as a the camera 14 and on the hand thereof it is determined where, starting from the lower end, the cutting up into scions must be performed. The rotation is continued until sufficient information is gathered to cut-off a scion and this does not need to be a complete rotation over 360° - on the other hand it is also possible that several complete revolutions are needed. The cutting is done by means of a - schematically indicated - cutter 18 which is provided at the end of the arm 20 of a - also schematically indicated - smart robot 22, 24, which receives positioning signals from an also schematically shown control logic 26 which, as indicated schematically by means of the arrows 28, also receives information from the camera 14.

In the known installation the branch to be treated is suspended from a gripper which can be moved in vertical direction, thus up and down, and is rotated around its longitudinal axis. This does not result in any problems when relatively short branches are to be treated but when one treats long branches swaying movements are encountered at some distance from the supporting point of the branch so that parts of the branch which lie at some distance from the supported end, will never describe a predictable path so that these parts can never be cut through at the correct position. Thus the known installation cannot treat long branches.

However the device according to the invention makes this possible. To this end the device is provided with a longitudinal guide tube, indicated with reference numeral 30, which is rotatably supported by means of bearings 31 in the housing 4, which is supported by the parts 6 and 10. At the lower end 16a of the tube 16 this tube is fixed in the mainly cylindrical carrier block 32 which is provided with the three pairs of downwardly protruding arms 34a, 34b, 34c, which are 120° apart from each other. These each support rotatingly two ends of the respective shafts 36a, 36b, 36c of three rollers 38a, 38b, 38c, made from soft material. One of these shafts, the shaft 36c, is elongated and carries a bevel gear wheel or friction wheel 40 which cooperates with a counter wheel 42 of which the shaft 44 is guided in the guiding block 46. This is fixed to the carrier block 32 and the free end 48 of this shaft 44 carries a gear or friction wheel 50 which cooperates with a gear wheel or friction wheel 52 which is supported in the housing 4. This gear wheel or friction wheel 52 cooperates with a much smaller gear wheel or friction wheel 54 which is driven by an electrical actuator 56 also carried by the central housing 4. A controlled excitation of the electro-actuator 46 thus results into a controlled driving of the roller 38c and, as the rollers 38a, 38b, 38c are all in contact with each other with their soft outer surfaces, also in the driving of the two other rollers 38a and 38b. In this way a branch 16 guided in-between the rollers 38a, 38b and 38c can be moved up and down in a controlled way while of a supplied branch the lower end will always be exactly centered on the lower side of the device, thus independently from the way in which the branch is supplied in the upper end of the tubular guide 30.

As will be clear from the above there must also be a controlled rotation of a supplied branch along the longitudinal axis thereof. This rotating movement is brought about by rotating the entire tube with the branch 16 therein and the carrying block 32 around the - vertical - axis thereof. To this end the tube 30 carries a pulley 60 which his driven by means of a drive belt 62 by the pulley 64 which is carried by the shaft of an electro-actuator 66 carried by the housing 4. This electro-actuator 66 too is controlled from the central control logic 26.

The control of the displacement of the branch in its longitudinal direction is thus effected via the rollers 38a, 38b, 38c, which are driven by a first electro-actuator 56; the angular position, which is independent from this displacement of the tube 30, is controlled by the electromotor 66.

In the device as described hereinbefore the untreated part of the branch remains immovable in the tube 30 and a univocal positioning of the part protruding from the tube 30 and which must be cut off, is ensured.

An advantage of the described device is that it can be built very compactly so that the cutting device has a maximum working space.

Of course details of the described device (shape and dimension of the input end, diameter of the tubular guide, shape and material of the rollers) can be adapted to specific branches.

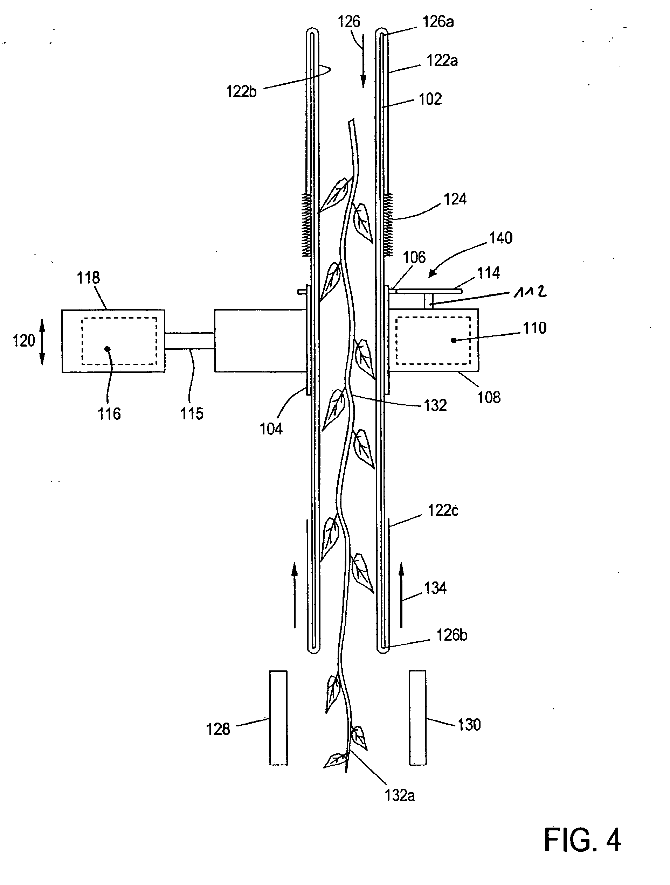

Figure 4 shows a second embodiment of the device. This figure shows a longitudinal tube 102 which is carried by a carrier bush 104 which is provided at its circumference with a tooth ring 106. The carrier bush 104 is, by means of (not shown) bearings, rotatably supported in a housing 108 which also carries a controllable electrical motor of which the output shaft 112 carries the gear wheel 114 which meshes in the tooth ring 106. In this way the angular position of the tube 102 with respect to the housing 108 can be adjusted as required. This angular position does not necessarily need to be a vertical position - in some cases, for instance when the scions can only be reached with difficulty, a deviation from that vertical position can be of advantage.

By means of a horizontal shaft 115 the housing 108 is connected to a setting mechanism 116 which can set the shaft 115 in one of two different angular positions differing over 180 degrees. The mechanism 116 is enclosed in the housing 118 which is either fixed or can be moved up and down by means of a suitable mechanism (not shown) in the direction of the arrows 120.

Around and in the tube 102 there is a hose 122 of supple material, for instance a suitable woven material. From a supply of compacted hose material 124 the hose 122 first goes with a first part 122a over the first (in the drawing upper) end 126a of the tube, then runs with the part 122b along the inner surface of the tube, goes over the second, in the drawing lower, end 126b of the tube and then goes with the end part 122c along the lower outer surface of the tube.

Below the lower end of this supply device there is the electronic assessing device, known in itself and not being part of the invention and comprising, such as known in itself, the lighting device 128 and the imaging device 130.

During use of the device, a branch, such as the branch 132, is introduced in the upper end of the tube 102 and a pulling force in the direction of the arrows 134 is exerted on the hose part 122c which exits from the lower opening 126b. Then the hose material displaces, from the supply 124, within the tube in the direction of the arrows 126, thus along the inner surface of the tube 102 and during this movement it entrains the branch 132 with it. This branch 132 will exit in a centered way at the lower end 126b and the outgoing part can be evaluated by means of the electronic imaging components 118 and 120, during which movement the carrier tube can be rotated by means of the mechanism 110 and the gear wheels 114, 116 over 360 degrees along the central axis of the carrier.

## Claims

1. Device (2) for offering an elongated branch (16, 132) with stems and leaves to an inspection and/or treating device while displacing the branch in, and rotating the branch around the longitudinal direction thereof, **characterised by** a mainly tubular guide (30, 102) of which the inner dimensions are adapted to he outer contours of a branch to be treated with the stems and leaves thereof, said guide (30, 102) being coupled with means (32, 60, 62, 64, 66 -108, 112, 114) for the controllable rotation thereof around its axis, having a input end and an output end, and cooperating with means (38a, 38b 38c - 122) to displace a branch, supplied into the input end, to past the output end.

2. Device according to claim 1, **characterised in that** the means for displacing the branch comprise driving rollers (38a, 38b 38c) below the output end of the guide, to be driven rotatingly, reaching with their outer surfaces to near the axis of the guide and having axes of rotation 36a, 36b, 36c) which cross the axes of the guide.

3. Device according to claim 1, **characterised in that** the tubular guides (30) is enclosed near the lower end thereof in a housing (4) with a number of pair wise downwardly protruding supporting arms (34a, 34b, 34c) in which the ends of the shafts (36a, 36b, 36c) of the drive rollers (38a, 38b, 38c), which cross the axis of the guide, are supported, one of said shafts (36c) carrying a driving wheel (40) which meshes with a driving wheel (42) perpendicular thereto which is fixed to the end of a driving shaft (44) supported in the housing (46) parallel to the axis of the guide, the tubular guide (30) being rotatably supported in a carrying housing (4) with adjustable height and being rotatably coupled with a first rotating actuator (66), carried by this housing while the driving shaft (44), which drives the driving wheel (54), is coupled to a second rotating actuator (56).

4. Device according to claim 1, **characterised in that** the means for displacing the branch (132) comprise a hose (122) from supple material, guided around the input (126a) and output end (126b) and which is, at each tube end edge, folded back in the direction of the other, and by means to exert a pulling force on the material which is folded around the one edge in the direction of the other edge.

5. Device according to claim 4, **characterised in that** a compacted length (124) of hose material is accommodated between both the tube end edges (126a, 126b).

6. Device according to claim 4-5, **characterised by** a number of pulling belts, arranged around the circumference of the hose and against the inner surface thereof, each with one end cooperating with a supply roller and with its other end cooperating with a driven pick-up roller.

7. Device according to claim 6, **characterised by** a turnover shaft (115), perpendicular to the longitudinal axis of the means and between the end edges (126a, 126b) around which the guiding means can be set in various angular positions.

## Patentansprüche

1. Gerät (2) zum Darbieten eines länglichen Zweigs (16, 132) mit Stängeln und Blättern für ein Prüf- und/oder Behandlungsgerät während des Verschiebens des Zweigs darin und Drehens des Zweigs um dessen Längsrichtung, **gekennzeichnet durch** eine hauptsächlich rohrförmige Führung (30, 102), deren Innenabmessungen an die Außenumrisse eines zu behandelnden Zweigs mit seinen Stängeln und Blättern angepast sind, wobei die Führung (30, 102) mit Mitteln (32, 60, 62, 64, 66 - 108, 112, 114) zur steuerbaren Drehung um seine Achse gekoppelt ist, mit einem Eingabeende und einem Ausgabeende und in Zusammenwirkung mit Mitteln (38a, 38b, 38c - 122) zum Verschieben eines Zweigs, der dem Eingabeende zugeführt ist, bis über das Ausgabeende hinaus.

2. Gerät nach Anspruch 1, **dadurch gekennzeichnet, dass** die Mittel zum Verschieben des Zweigs Antriebsrollen (38a, 38b, 38c) unter dem Ausgabeende der Führung umfassen, die drehbar angetrieben werden sollen und mit ihren Außenflächen bis in die Nähe der Achse der Führung reichen und Drehachsen (36a, 36b, 36c) aufweisen, die die Achsen der Führung kreuzen.

3. Gerät nach Anspruch 1, **dadurch gekennzeichnet, dass** die rohrförmige Führung (30) in der Nähe ihres unteren Endes in einem Gehäuse (4) mit einer Anzahl von paarweise nach unten vorstehenden Stützarmen (34a, 34b, 34c) eingeschlossen ist, in denen die Enden der Wellen (36a, 36b, 36c) der Antriebsrollen (38a, 38b, 38c), die die Achse der Führung kreuzen, abgestützt sind, wobei eine der Wellen (36c) ein Antriebsrad (40) trägt, das in ein senkrecht dazu stehendes Antriebsrad (42) eingreift, welches am Ende einer Antriebswelle (44) befestigt ist, die in dem Gehäuse (46) parallel zur Achse der Führung gestützt ist, wobei die rohrförmige Führung (30) drehbar in einem Traggehäuse (4) mit einstellbarer Höhe gestützt ist und drehbar mit einem ersten Drehsteller (66) gekoppelt ist, der von diesem Gehäuse getragen ist, während die Antriebswelle (44), die das Antriebsrad (54) antreibt, mit einem zweiten Drehsteller (56) gekoppelt ist.

4. Gerät nach Anspruch 1, **dadurch gekennzeichnet, dass** die Mittel zum Verschieben des Zweigs (132) einen Schlauch (122) aus geschmeidigem Material umfassen, der um das Eingabe- (126a) und Ausgabeende (126b) geführt ist und an jeder Rohrendkante in der Richtung des anderen zurückgefaltet ist, und zum Ausüben einer Zugkraft auf das Material dient, das um die eine Kante in der Richtung der anderen Kante gefaltet ist.

5. Gerät nach Anspruch 4, **dadurch gekennzeichnet, dass** eine verdichtete Länge (124) des Schlauchmaterials zwischen den beiden Rohrendkanten (126a, 126b) untergebracht ist.

6. Gerät nach Anspruch 4 bis 5, **gekennzeichnet durch** eine Anzahl Zugriemen, die um den Umfang des Schlauchs und gegen dessen Innenfläche angeordnet sind, jeder mit einem seiner Enden in Zusammenwirkung mit einer Zufuhrrolle und mit seinem anderen Ende in Zusammenwirkung mit einer angetriebenen Aufnehmerrolle.

7. Gerät nach Anspruch 6, **gekennzeichnet durch** eine Wendewelle (115), senkrecht stehend zur Längsachse des Mittels und zwischen den Endkanten (126a, 126b), um die das Führungsmittel in verschiedenen Winkelpositionen eingestellt sein kann.

## Revendications

1. Dispositif (2) pour offrir une branche allongée (16, 132) ayant des tiges et des feuilles à un dispositif d'inspection et/ou de traitement tout en y déplaçant la branche, et en faisant tourner la branche autour de sa direction longitudinale, **caractérisé par** un guide principalement tubulaire (30, 102) dont les dimensions intérieures sont adaptées aux contours extérieurs d'une branche à traiter avec ses tiges et ses feuilles, ledit guide (30, 102) étant couplé à un moyen (32, 60, 62, 64, 66 - 108, 112, 114) pour la rotation commandée de celui-ci autour de son axe, ayant une extrémité d'entrée et une extrémité de sortie, et coopérant avec un moyen (38a, 38b, 38c - 122) pour déplacer une branche, introduite dans l'extrémité d'entrée, jusqu'à l'extrémité de sortie.

2. Dispositif selon la revendication 1, **caractérisé en ce que** le moyen pour déplacer la branche comprend des roulettes d'entraînement (38a, 38b, 38c) sous l'extrémité de sortie du guide, destinées à être entraînées en rotation, et qui atteignent presque l'axe du guide avec leurs surfaces extérieures et dont les axes de rotation (36a, 36b, 36c) coupent les axes du guide.

3. Dispositif selon la revendication 1, **caractérisé en ce que** le guide tubulaire (30) est enfermé près de son extrémité inférieure dans un boîtier (4) avec un nombre de bras de support faisant saillie vers le bas par paires (34a, 34b, 34c) dans lequel les extrémités des axes (36a, 36b, 36c) des roulettes d'entraînement (38a, 38b, 38c), qui coupent l'axe du guide, sont supportées, l'un desdits axes (36c) portant une roue d'entraînement (40) qui se met en prise avec une roue d'entraînement (42) perpendiculaire à celle-ci qui est fixée à l'extrémité d'un arbre d'entraînement (44) supporté dans le boîtier (46) parallèlement à l'axe du guide, le guide tubulaire (30) étant supporté à rotation dans un boîtier de support (4) avec une hauteur réglable et étant couplé en rotation avec un premier actionneur rotatif (66), porté par ce boîtier tandis que l'arbre d'entraînement (44), qui entraîne la roue d'entraînement (54), est accouplé à un deuxième actionneur rotatif (56).

4. Dispositif selon la revendication 1, **caractérisé en ce que** le moyen pour déplacer la branche (132) comprend un tuyau (122) en matériau souple, guidé autour de l'extrémité d'entrée (126a) et de l'extrémité de sortie (126b) et qui est, à chaque bord d'extrémité de tube, replié en direction de l'autre, et par un moyen pour exercer une force de traction sur le matériau qui est plié autour d'un bord en direction de l'autre bord.

5. Dispositif selon la revendication 4, **caractérisé en ce qu'**une longueur compactée (124) de matériau de tuyau est logée entre les deux bords d'extrémité de tube (126a, 126b).

6. Dispositif selon la revendication 4 ou 5, **caractérisé par** un nombre de courroies de traction, agencées autour de la circonférence du tuyau et contre la surface intérieure de celui-ci, chacune ayant une extrémité coopérant avec une roulette d'alimentation et son autre extrémité coopérant avec une roulette d'extraction entraînée.

7. Dispositif selon la revendication 6, **caractérisé par** un arbre de rotation (115), perpendiculaire à l'axe longitudinal du moyen et entre les bords d'extrémité (126a, 126b) autour desquels le moyen de guidage peut être mis dans différentes positions angulaires.
